# FASCICULE DE BREVET EUROPEEN

(11) **EP 3 114 090 B1**
(45) Date de publication et mention de la délivrance du brevet: **26.09.2018**
(21) Numéro de dépôt: 15706045.0
(22) Date de dépôt: 25.02.2015
(51) Int. Cl.: C02F 3/10, C02F 3/12, B01J 19/30

(54) **SUPPORT DE BACTÉRIES UTILISABLE DANS UN DISPOSITIF D'ÉPURATION D'EAUX USÉES**
BAKTERIENTRAGER ZUR VERWENDUNG IN EINER VORRICHTUNG ZUR REINIGUNG VON ABWASSER
BACTERIA CARRIER THAT CAN BE USED IN A DEVICE FOR PURIFYING WASTEWATER

(30) Priorité: 05.03.2014 FR 1451781; 05.03.2014 FR 1451782
(43) Date de publication de la demande: 11.01.2017
(73) Titulaire: Aliaxis R&D S.A.S., 78540 Vernouillet (FR)
(72) Inventeur: DELAIR, Vanessa, 78000 Versailles (FR); MANTEL, Maxime, 78700 Conflans Sainte Honorine (FR); LE GOFF, Jean-Philippe, 78510 Triel sur Seine (FR); CARMIER, Jean, 78500 Sartrouville (FR)
(74) Mandataire: 24 IP Law Group France
(86) Numéro de dépôt international: PCT/EP2015/053958
(87) Numéro de publication internationale: WO 2015/132107

(56) Documents cités:
- WO-A1-93/11075
- DE-C1- 10 062 119
- DE-U1- 20 318 973
- FR-A1- 2 602 223
- FR-A1- 2 971 949
- GB-A- 1 439 745
- US-A- 5 578 202
- US-A1- 2011 168 611

## Description

La présente invention a trait au domaine de l'assainissement non collectif, notamment le traitement des eaux usées domestiques ou assimilées.

Il existe des procédés et des cuves ou stations d'épuration de traitement des eaux utilisant une culture bactérienne, assurant les réactions biologiques impliquées dans le traitement des eaux usées et en particulier l'oxydation et la réduction des matières carbonées et azotées.

Plusieurs grandes étapes sont nécessaires : décantation, prétraitement anaérobie, traitement aérobie, clarification. Les stations existantes comprennent typiquement différents compartiments, dans lesquels les différentes étapes sont réalisées, avec la possibilité d'étapes additionnelles, comme une étape de pré-clarification avant la clarification et le rejet des eaux propres.

Dans un procédé d'assainissement non collectif pour l'épuration des eaux usées du type à boues activées à culture libre avec décantation secondaire, il est souvent prévu: une étape initiale de digestion anaérobie dans un compartiment de digestion anaérobie, une étape ultérieure d'épuration aérobie dans un compartiment d'épuration aérobie, moyennant une distribution d'air, et une étape ultérieure de décantation dans un compartiment de décantation.

Un exemple de procédé est tel que les matières ayant subi l'étape d'épuration aérobie traversent le lit de boues obtenu dans l'étape de décantation, dans le sens bas-haut, l'étape de décantation étant ainsi également une étape de réaction biologique entre les matières ayant subi l'étape d'épuration aérobie et s'apprêtant à subir l'étape de décantation et les boues du lit de boues obtenues dans l'étape de décantation. Cependant, ce procédé génère des flux d'eau avec des matières en suspension aptes à perturber la décantation, ce qui influe sur les performances d'un tel procédé.

Selon un procédé bien connu en lui-même, on utilise un dispositif d'assainissement non collectif pour l'épuration des eaux usées du type à boues activées à culture libre avec décantation secondaire, comprenant, d'amont en aval : un compartiment de digestion anaérobie, pourvu d'une amenée des eaux usées à assainir et épurer située en partie haute, un compartiment d'épuration aérobie, pourvu de moyens de distribution d'air, un compartiment de décantation, pourvu de moyens de déflection et d'une évacuation des eaux assainies et épurées, ladite évacuation étant située en partie haute, un passage pour les matières entre le compartiment de digestion anaérobie et le compartiment d'épuration aérobie, un passage pour les matières entre le compartiment d'épuration aérobie et le compartiment de décantation.

Ainsi, le compartiment de décantation est également un compartiment de réaction biologique entre les matières provenant du compartiment d'épuration aérobie et s'apprêtant à passer dans le compartiment de décantation et les boues du lit de boues qui reposent dans le compartiment de décantation.

Pour les réactions biologiques des supports de croissance, fixés et immergés dans une ou plusieurs cuves de traitement, ont été développés, en tant que support de fixation des bactéries. Les différentes bactéries s'agglomèrent alors en biofilm sur le support.

Les supports actuels connus sont des supports en plastique. On constate cependant que les supports plastiques, s'ils sont trop petits, peuvent être emportés dans les rejets d'eaux usées traitées et créer des nuisances environnementales, alors que les supports plastiques trop gros disposent d'une surface spécifique faible. De même, les supports réalisés en mousse à cellules ouvertes ou avec des lamelles présentant un espace trop étroit, ne permettent pas un développement maximal du biofilm (dimensions insuffisantes des cellules), et peuvent se colmater dans le temps.

Le document DE 203 18 973 U1 décrit un support de bactéries selon le préambule de la revendication 1.

Un objectif de la présente invention est de proposer un support de bactérie perfectionné.

Décrit est aussi un procédé de fabrication d'un support de fixation de bactéries, présentant un corps de support et des lamelles espacées, et ayant une résistance contre les chocs et une géométrie complexe, procédé dans lequel un mélange comportant au moins une résine plastique et une charge organique végétale est utilisé pour remplir un moule de forme correspondante par injection sous pression.

Selon un aspect, la charge organique végétale est une charge favorisant la fixation de bactéries. Une charge organique végétale préférée est du type charge cellulosique, en particulier du bois. En prévoyant une charge organique végétale sensiblement comprise entre 15 et 30% en masse, on s'assure d'obtenir un support ayant une densité optimale pour une application de traitement d'eaux usées.

Selon un mode de réalisation, le mélange a une fluidité comprise sensiblement entre 5 et 20g/10 minutes à 190°C et sous 2,16kg. De tels paramètres de fluidité permettent d'assurer une stabilité du procédé de fabrication.

Selon un aspect, le mélange a une densité comprise sensiblement entre 0,920 et 0,950 g/cm³, avant injection, afin d'obtenir un support qui ne flotte pas mais qui ne coule pas non plus, avec une faible inertie.

La présente invention vise également un support de fixation de bactéries en matériau composite plastique/végétal, en particulier obtenu selon le procédé décrit, sans que le procédé de fabrication ne soit limitatif.

La présente invention vise un support de fixation de bactéries selon la revendication 1. Le support de fixation de bactéries comporte un corps de support avec une pluralité de lamelles espacées, au moins deux lamelles de la pluralité de lamelles ayant des extrémités sensiblement parallèles, le corps de support ayant un moyen d'anti-enchevêtrement du support avec un support identique ou similaire, dans lequel le moyen anti-enchevêtrement comprend une ceinture périphérique adaptée pour empêcher l'enchevêtrement de lamelles du support avec des lamelles d'un support identique ou semblable. Le support de fixation comprend une plaquette centrale, à partir de laquelle s'étendent une pluralité de premières lamelles, et au moins une plaquette de raccord de lamelles, reliant entre elles des lamelles de la pluralité de premières lamelles, et des deuxièmes lamelles s'étendant sensiblement depuis la plaquette de raccord. La plaquette de raccord est parallèle à la plaquette centrale.

Ainsi, selon un aspect de la présente invention l'on propose de munir un support de fixation d'une ceinture périphérique, qui empêche l'imbrication de plusieurs supports et constitue également une protection contre les chocs, en particulier entre plusieurs supports de fixation, protégeant ainsi, en utilisation dans un dispositif de traitement des eaux usées, le biofilm accumulé sur le support. De plus, une telle ceinture permet de préserver l'intégrité du support.

Selon l'invention revendiquée, un espace inter-lamellaire est au moins égal ou supérieur à 10 mm. Un tel espace inter-lamellaire permet, en utilisation, une croissance de biofilm sur toutes les surfaces libres, tout en évitant aux différentes parties du biofilm de se toucher et de s'agglomérer entre elles. Ainsi, l'espace inter-lamellaire est choisi pour préserver la surface utile du support de fixation.

Avantageusement, l'agencement de deux plaquettes à partir desquelles s'étendent des lamelles permet d'augmenter la surface spécifique du support de fixation.

Selon l'invention revendiquée, le support comprend une pluralité de troisièmes lamelles, s'étendant de la plaquette centrale et symétriques de part et d'autre de la plaquette centrale par rapport à la pluralité de premières lamelles, reliant entre elles des lamelles de la pluralité de troisièmes lamelles, des quatrièmes lamelles s'étendant sensiblement depuis la deuxième plaquette de raccord. Avantageusement, le support présente ainsi une symétrie, permettant d'ajuster des performances du support, et en particulier le positionnement du support dans un volume d'eau.

Dans un mode de réalisation, le support comprend une ou plusieurs des caractéristiques suivantes: une structure squelette en forme d'un ou plusieurs anneaux, une structure squelette comportant au moins une plaquette centrale à partir de laquelle s'étendent les lamelles, symétriquement de part et d'autre de la plaquette, et des éléments raccordant des extrémités libres des lamelles.

Selon un aspect, le support comprend une taille comprise entre 5 et 7 cm, empêchant, lorsque le support est utilisé dans un dispositif de traitement des eaux usées, de s'échapper, ce qui conduirait à une réduction de débit voire un blocage de canalisations, et pourrait également entrainer une pollution extérieure. De même, le support a de préférence une surface spécifique comprise entre 800 et 1500m²/m³ ; et/ou un ratio masse/surface inférieur ou égal à 1200 g/m².

En configurant le support pour que la ceinture périphérique soit en position horizontale lorsque le support est en immersion libre, on favorise la faible inertie du support, tout en prévenant une imbrication de lamelles de plusieurs supports.

D'autres caractéristiques et avantages de la présente invention ressortiront de la description faite ci-après en référence aux dessins annexés qui en illustrent un exemple de réalisation dépourvu de tout caractère limitatif, parmi lesquels :
- la figure 1 est une vue de côté d'une cuve d'un dispositif d'épuration d'eaux usées selon un mode de réalisation qui ne fait pas partie de l'invention revendiquée,
- la figure 2 est une vue en coupe de la cuve de la figure 1,
- la figure 3 est une vue d'un système de surverse dans un dispositif d'épuration d'eaux usées selon un mode de réalisation qui ne fait pas partie de l'invention revendiquée,
- la figure 4 est une vue d'un système aéraulique utilisable d'un dispositif d'épuration d'eaux usées selon un mode de réalisation qui ne fait pas partie de l'invention revendiquée,
- la figure 5 est un schéma de principe d'un procédé de traitement des eaux selon un mode de réalisation qui ne fait pas partie de l'invention revendiquée,
- la figure 6 illustre un mode de réalisation d'un support de culture selon la présente invention,
- la figure 7 illustre un autre mode de réalisation d'un support de culture selon la présente invention,
- la figure 8 illustre un autre mode de réalisation d'un support de culture qui ne fait partie de l'invention revendiquée.
- la figure 9 est un schéma de principe d'un procédé selon un mode de réalisation qui ne fait partie de l'invention revendiquée.

Sur les dessins, des éléments identiques ou similaires sont indiqués avec des numéros de référence identiques ou similaires.

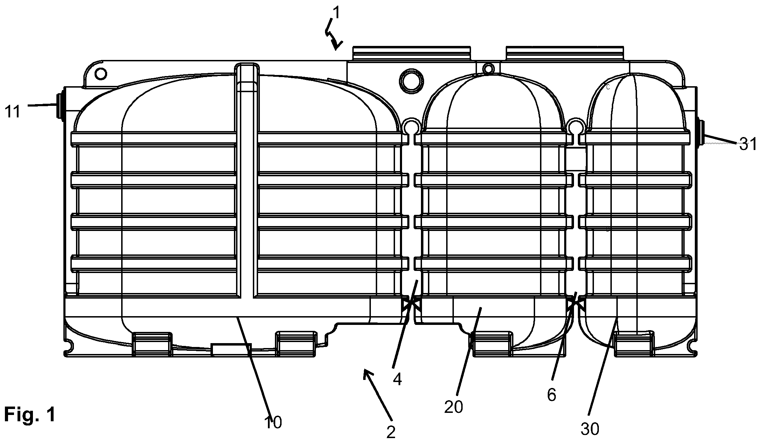

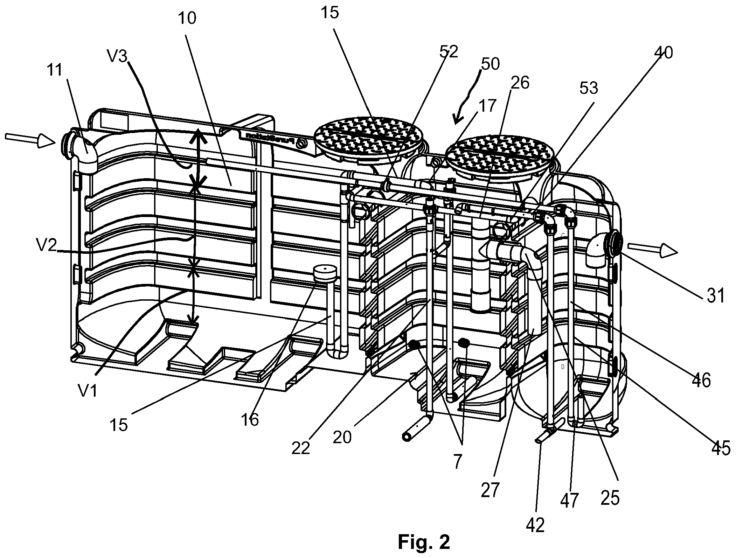

La figure 1 montre une vue de côté d'une cuve 2 d'un dispositif 1 d'épuration d'eaux usées selon un mode de réalisation de l'invention, et la figure 2 est une vue en coupe de la cuve de la figure 1.

La cuve 2 est une cuve monobloc à trois compartiments, comprenant un compartiment de décantation 10, pour la décantation des eaux usées, un compartiment de réactions 20, pour le traitement biologique des eaux usées, et un compartiment de clarification 30, pour la clarification des eaux.

Le compartiment de décantation 10 est pourvu d'une arrivée 11, pour l'arrivée des eaux usées. De préférence, les eaux usées arrivent par écoulement gravitaire dans le compartiment de décantation 10. Le compartiment de clarification 30 est muni d'une sortie 31, pour l'évacuation des eaux usées traitées.

Entre le compartiment de décantation 10 et le compartiment de réactions 20 se trouve une première paroi séparatrice 4, et entre le compartiment de réaction 20 et le compartiment de clarification 30 se trouve une deuxième paroi séparatrice 6. Les première et deuxième parois séparatrices 4, 6 ont des extrémités supérieures sur lesquelles est fixé un cavalier porteur 50, dont la fonction va être explicitée dans ce qui suit.

La cuve 2 est de préférence issue d'un procédé de fabrication dit de roto-moulage d'un matériau polymère tel que le polyéthylène. Le roto-moulage de la cuve monobloc permet de garantir l'étanchéité des première et deuxième parois séparatrices 4,6.

Le compartiment de décantation 10 est prévu pour permettre la décantation des eaux usées, c'est-à-dire une séparation des matières contenues dans les eaux usées, les matières les plus lourdes, telles les matières minérales, tombant au fond du compartiment, alors que les matières les plus légères, telles les graisses, restant en surface.

Le compartiment de décantation 10 est dimensionné de sorte d'avoir un volume inférieur V1, un volume intermédiaire V2, et d'un volume supérieur V3 dit volume de tampon.

Le volume inférieur V1 est prévu pour le stockage des matières lourdes tombées au fond du compartiment, lors de la décantation. Le volume intermédiaire V2 correspond au volume prévu d'eaux usées à traiter en utilisation courante. Le volume supérieur V3 est un volume tampon, prévu normalement pour rester vide, permettant d'avoir un espace pour une arrivée d'un volume exceptionnel d'eau, ce qui permet d'absorber des fortes pointes en entrée comme par exemple lors d'une vidange de baignoire.

Un système de transfert 15 permet le transfert des eaux usées après décantation, débarrassées des matières les plus lourdes, depuis le compartiment de décantation 10 vers le compartiment de réaction 20. Dans le mode de réalisation illustré, le système de transfert 15 est un système aéraulique, fixé par un système de clips 51 sur le cavalier porteur 50.

Le système de transfert 15 comprend un port d'entrée 16, disposé dans le compartiment de décantation, et un port de sortie 17 débouchant dans le compartiment de réactions 20. Le port d'entrée 16 est agencé dans le volume intermédiaire V2 du compartiment de décantation 10, c'est-à-dire à distance des matières lourdes. Le port d'entrée 16 est également préférentiellement pourvu d'une grille de filtration de gros flottants. Le port de sortie 17 est prévu pour déboucher en hauteur du compartiment de réactions 20, au dessus de la hauteur maximale prévue de volume d'eau. Cet agencement permet ainsi à un installateur de voir si le premier système de transfert 15 fonctionne correctement, dans le cadre d'une opération de maintenance par exemple.

Pour permettre le traitement biologique des eaux usées à traiter dans le compartiment de réactions 20, des supports de fixation 7sont prévus, permettant la fixation de flocs bactériens sous la forme de biofilm.

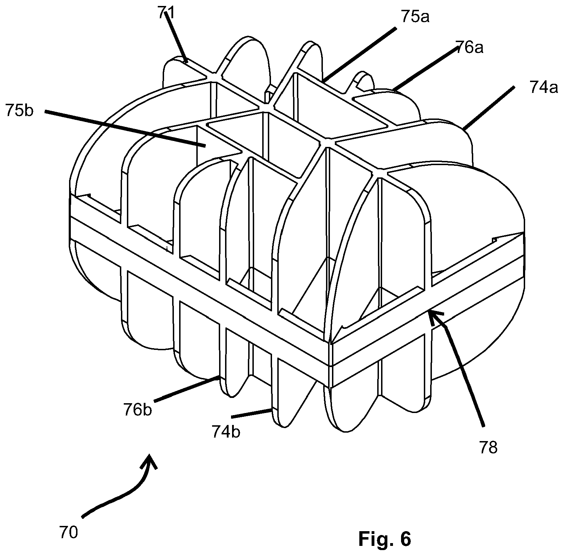

Des supports selon un mode de réalisation 70, 270, 370 sont décrits plus loin, en référence aux figures 6 à 8.

Selon un mode de réalisation qui ne fait pas partie de l'invention revendiquée, les supports sont en immersion libre dans le compartiment de réactions 20. Sur la figure 2, uniquement deux supports 7 sont représentés à titre illustratifs uniquement. De préférence, les supports occupent un volume maximum correspondant à 30 % du volume du compartiment de réactions 20.

Afin d'assurer les conditions d'aérobie et d'anoxie permettant à la charge organique d'être digérée et à l'azote d'être éliminé, un système diffuseur d'air 22 est agencé dans le compartiment, pour permettre via un automate programmable l'aération séquentielle du compartiment de réactions 20.

Le système diffuseur d'air 22 est fixé sur le cavalier porteur 50, par un système de clips 52. Le système diffuseur d'air 22 est commandé par un automate programmable (non représenté sur les figures), dans une armoire de commande.

Un système d'écoulement 25 est prévu pour permettre le transfert des eaux usées traitées vers le compartiment de clarification 30, de préférence par écoulement gravitaire, et comprend un port d'entrée 26 disposé dans le compartiment de réactions 20, et un port de sortie 27 débouchant dans le compartiment de clarification 30. Le système d'écoulement 25 est fixé sur le cavalier porteur 50, par un système de fixation type clips 53.

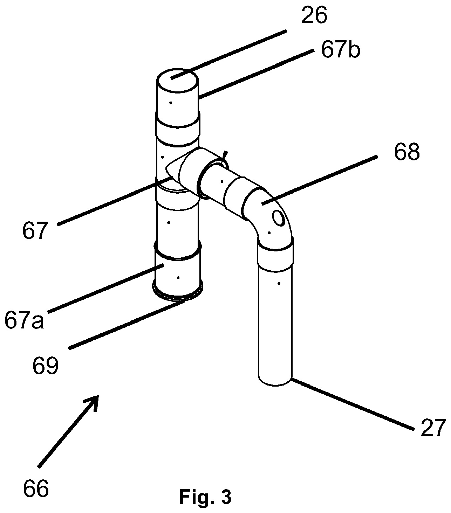

Le système d'écoulement 25 comprend une surverse 66, agencée pour maintenir les supports dans le compartiment de réactions 20. Comme bien vu sur la figure 3, la surverse 66, dans le mode de réalisation de l'invention, comprend un corps de surverse avec une première extrémité longitudinale 67 sensiblement en forme de T horizontal, avec le port d'entrée 26, et une deuxième extrémité longitudinale avec un coude 68 avec le port de sortie 27, prévu pour déboucher en plongeant dans le compartiment de clarification 30.

L'extrémité longitudinale 67, agencée dans le compartiment de réactions 20, comprend une branche supérieure 67b ouverte avec le port d'entrée 26, et une branche inférieure 67a munie d'un bouchon 69 percé, pour empêcher aux supports d'être lessivés vers le compartiment de clarification 30.

Le coude 68 est agencé dans le compartiment de clarification 30, Le coude 68 est percé, sur sa zone incurvée de plus grande courbure, afin de permettre un équilibrage des pressions à la pression atmosphérique, pour prévenir la formation de bouchons et favoriser l'écoulement des eaux.

Comme bien vu à la figure 2, le coude 68 de la surverse 66 débouche dans le compartiment de clarification 30, assez proche du fond, pour ne pas perturber les strates d'eau clarifiées avant leur évacuation via la sortie 31, qui est agencée en partie supérieure du compartiment 30, afin d'évacuer les eaux clarifiés.

Un système de recirculation 40 permet de recirculer des boues résiduelles issues de la clarification, depuis le compartiment de clarification 30 vers le compartiment de réactions 20. Dans le contexte de l'invention, on parle ainsi de technologie dite IFAS (Integrated Fixed-film Activated Sludge).

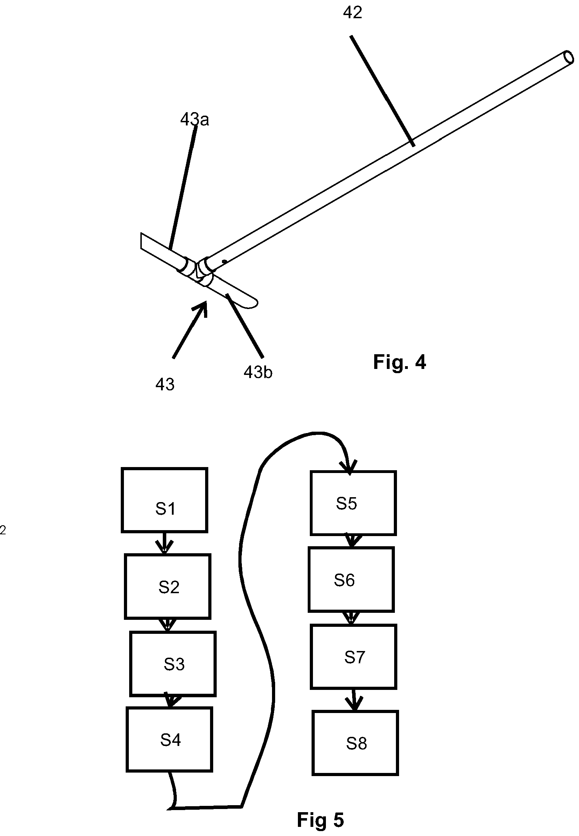

Le système de recirculation 40 est fixé sur le cavalier porteur 50. Le système de recirculation 40 comprend un système aéraulique 42, bien vu à la figure 4.

Le système aéraulique 42 comprend une extrémité inférieure 43, agencée au fond du compartiment de clarification 30, afin de permettre la récupération des boues résiduelles accumulées au fond du compartiment de clarification 30, et une extrémité supérieure 44, non illustrée sur la figure 4, débouchant dans le compartiment de réactions 20. Par exemple, l'extrémité inférieure peut être située entre 5 et 10 cm au-dessus du fond du compartiment de clarification 30.

L'extrémité inférieure 43 est sensiblement en forme de T inversé, dans lequel le T axant une première extrémité longitudinale 43a et une deuxième extrémité longitudinale 43b. Les extrémités longitudinales sont biseautées, vers le fond du compartiment 30 afin d'augmenter la quantité de matières à recirculer vers le compartiment de réactions 20.

Un système de recirculation additionnel 45 est également prévu, pour le transfert de deuxièmes matières depuis le compartiment de clarification 30 vers le compartiment de décantation 20. Le système de recirculation additionnel 45 comprend un système aéraulique 46 ayant une extrémité inférieure 47 dans le compartiment de clarification 30, et une extrémité supérieure 48, débouchant dans le compartiment de clarification 10.

L'extrémité inférieure 47 est coudée en forme type siphon, agencée à un niveau supérieur par rapport à l'extrémité inférieure 43 du système de recirculation, par rapport à un fond du compartiment de clarification 30.

Le système de recirculation additionnel 45 permet avantageusement d'assurer une sécurité en cas de défaillance du système de recirculation 40. Autrement, le système de recirculation additionnel 45 permet de maintenir l'alimentation des flocs bactériens dans le compartiment de réactions 20, l'eau recirculée étant renvoyée dans le compartiment de décantation 10.

Le compartiment de clarification est également connecté à une sortie qui mène à travers un dispositif de visite pour l'échantillonnage de l'effluent.

Ainsi, le cavalier porteur 50 est configuré pour maintenir le système de transfert 15, le système d'écoulement 25 et le système de recirculation 40, ainsi que le système de recirculation additionnel ainsi que le système diffuseur 22.

Le cavalier porteur 50 comprend au moins deux clips 52, 53 configurés pour se clipser sur respectivement les extrémités supérieures des premières et deuxièmes parois séparatrices 4, 6, respectivement. De même, la fixation des différents systèmes sur le cavalier porteur 50 est de préférence réalisée par des systèmes de clips, économiques et faciles à mettre en oeuvre et permettant optionnellement un guidage de l'utilisateur lors du montage et démontage du dispositif

Dans le mode de réalisation illustré, les compartiments sont agencés en succession et dimensionnés de sorte à ce que le volume du compartiment de décantation soit sensiblement égal à 45% du volume du compartiment de réactions, et le premier système de transfert est agencé pour vider le compartiment de décantation à environ 50%. Ceci permet d'avoir un volume tampon d'environ 750 litres pour absorber les fortes pointes en entrée comme par exemple lors d'une vidange d'une baignoire.

De plus, les systèmes aérauliques et l'aérateur sont pilotés par une unité de commande, non illustrée, dans une armoire de commande. Le diamètre de tuyaux des systèmes aérauliques et de l'aérateur peuvent être choisis pour permettre un débit d'air suffisant. Par exemple, le débit horaire des systèmes aérauliques est typiquement prévu pour faire passer 900 Litres d'eaux usées dans le dispositif par jour, en utilisation normale. De manière connue, les systèmes aérauliques sont gérés à l'aide d'un système comprenant un compresseur d'air, des électrovannes, et l'armoire de commande.

De même, l'aérateur est également piloté par l'unité de commande. Des tuyaux, de diamètre différent, permettent d'amener l'air nécessaire pour le fonctionnement de l'aérateur et des systèmes aérauliques.

Un procédé d'épuration qui ne fait pas partie de l'invention revendiquée va être décrit ci-dessous, en référence à la figure 5, et à l'aide du dispositif décrit à l'aide des figures 1 et 2, en récapitulant les particularités décrites auparavant pour le dispositif d'épuration, l'agencement de positionnement/support d'éléments aérauliques d'un dispositif d'épuration d'eaux usées et des supports de culture. Toute particularité précitée récapitulée ici ou non doit être comprise comme pouvant caractériser le procédé d'épuration.

Le procédé d'épuration commence par la décantation d'eaux usées, à l'étape S1, qui sont amenées dans le compartiment de décantation 10, via l'arrivée 11.

A l'étape S2, les eaux usées décantées sont transférées depuis le compartiment de décantation 10 vers le compartiment de réactions 20. Pour le transfert, le système de transfert 15, comprenant uniquement des éléments aérauliques, est utilisé. Un système aéraulique est plus économique qu'un système électromécanique type pompe immergée.

Une étape S3 de traitement aérobie dans le compartiment de réactions 20 suit l'étape de transfert. L'étape de traitement aérobie inclut des phases d'aération et de repos, en alternance, afin d'assurer des conditions d'aérobie et d'anoxie permettant la digestion des charges organiques par les flocs bactériens fixés sur les supports, immergés et en suspension libre dans le compartiment de réactions 20.

L'arrivée des eaux usées décantées dans le compartiment de réactions 10 fait monter le niveau de l'eau dans le compartiment de réactions 20, entrainant l'écoulement d'une partie des eaux traitées, via le système d'écoulement 25, passif, gravitaire , depuis le compartiment de réactions vers un compartiment de clarification, à l'étape S4.

L'écoulement d'une partie des eaux usées comprend une étape S5 de maintien de flocs bactériens comprenant une étape de maintien des supports dans le compartiment de réactions 20, en particulier via la surverse 26 conçue pour empêcher le lessivage des supports en immersion libre dans le compartiment de réactions.

Une étape de clarification S6 a ensuite lieu dans le compartiment de clarification 30, permettant aux matières résiduelles de retomber dans le fond du compartiment de clarification 30.

Le procédé comprend également une étape de recirculation S7, pour le transfert de premières matières depuis le compartiment de clarification 30 vers le compartiment de réactions 20, réalisée par l'intermédiaire du système de recirculation 40.

Une étape de recirculation additionnelle S8 est également prévue pour ramener des deuxièmes matières depuis le compartiment de clarification 30 vers le compartiment de décantation 11, à l'aide système de recirculation additionnel 40. Cette étape de recirculation additionnelle 38 est prévue en fonctionnement pour maintenir la circulation des eaux et permettent d'assurer le maintien de la population bactérienne qui ont ainsi, grâce à la recirculation de l'eau dans le compartiment de décantation, toujours de quoi s'alimenter. Cette étape de recirculation additionnelle permet de palier une défaillance éventuelle dans l'étape de recirculation, par exemple à cause d'une défaillance du système de recirculation.

Les étapes de transfert et de recirculation sont réalisées de manière séquencée, de façon à permettre aux différentes étapes de décantation, de réactions biologiques et de clarification d'avoir assez de temps pour se réaliser.

De même, les étapes alternées d'aération dans le compartiment de réactions peuvent être commandées pour un traitement d'un volume courant prédéterminé. Par exemple, une capacité de traitement de 6 équivalents habitants peut être envisagée, soit une capacité hydraulique journalière de traitement de 900 litres.

Par ailleurs, il est prévu de vider le compartiment de décantation 10 afin de laisser le volume supérieur V3 vide, afin que ce volume supérieur puisse laisser de l'espace vide dans le compartiment de décantation pour une arrivée d'un volume exceptionnel d'eau. En reprenant l'exemple ci-dessus de la capacité journalière de traitement de 900 litres, le dispositif de traitement des eaux et les étapes de transfert du procédé peuvent être ajustés pour laisser un volume tampon de 750 litres. Ainsi, on peut prévoir un volume transféré de 80 litres par heure entre le compartiment de décantation et le compartiment de réactions. Ceci n'est qu'un exemple non limitatif, qui peut varier, en autre, en fonction des dimensions des différents compartiments de la cuve 2, des volumes cibles à traiter, de l'agencement du système de transfert.

Une armoire de commande comprenant un système de commande peut être utilisée pour régler des paramètres de temps et/ou d'injection des diffuseurs et/ou des systèmes aérauliques. Les systèmes de commande sont bien connus de l'homme du métier et ne seront pas décrits dans la présente description.

La figure 6 illustre un support de fixation 70 selon un mode de réalisation de l'invention.

Le support de fixation 70 comporte une plaquette centrale 71, à partir de laquelle s'étendent une pluralité de premières lamelles 74a, et au moins une plaquette de raccord 75a de lamelles, reliant entre elles des lamelles de la pluralité de premières lamelles 74a, et des deuxièmes lamelles 76a s'étendant sensiblement depuis la plaquette de raccord 75a.

De manière symétrique de part et d'autre de la plaquette centrale 71, une pluralité de troisièmes lamelles 74b s'étendent de la plaquette centrale, symétriques à la pluralité de premières lamelles 74a, et une deuxième plaquette de raccord 75b relie entre elles des lamelles de la pluralité de troisièmes lamelles 74b. Des quatrièmes lamelles 76b s'étendant sensiblement depuis la deuxième plaquette de raccord 75b, symétriques aux deuxièmes lamelles 76a par rapport à la plaquette centrale 71..

Dans le mode de réalisation représenté, les plaquettes de raccord 75a, 75b sont sensiblement parallèles à la plaquette centrale 71. Ceci n'est qu'un exemple non limitatif.

La présence de plaquettes de raccord permet avantageusement d'augmenter la surface spécifique utile, pour la fixation et la formation de biofilm.

Une ceinture périphérique 78 entoure le corps de support. La ceinture périphérique empêche l'enchevêtrement de lamelles du support avec des lamelles d'un support identique ou semblable, et constitue ainsi un moyen d'anti-enchevêtrement.

Le support a un centre de gravité tel que la ceinture périphérique soit en position horizontale lorsque le support est en immersion libre.

Un espace inter-lamellaire est au moins égal ou supérieur à 10 mm, afin de évitant aux différentes parties du biofilm de se toucher et s'agglomérer entre elles, une protection du biofilm contre les chocs inter pièces et les arrachements pouvant en résulter.

Le support a une taille comprise entre 5 et 7 cm, ce qui permet d'empêcher que le support 70 ne puisse s'échapper d'une cuve de traitement telle que la cuve 2, ce qui pourrait réduire le débit des canalisations ou les bloquer, voire polluer le milieu récepteur des eaux usées traitées et surtout appauvrir le réacteur biologique.

Le support 70 a une surface spécifique comprise entre 800 et 1500m²/m³, afin de maintenir un nombre de supports optimisé à l'intérieur du réacteur biologique.

De même, un ratio masse/surface inférieur ou égal à 1200 g/m², permet d'optimiser la quantité de matière première utilisée.

Le nombre de lamelles sur le support 70 peut varier, selon la taille du support par exemple et/ou la surface spécifique cible.

Le support est réalisé dans un mélange de matériaux organiques ou compound favorisant la formation et l'adhésion du biofilm à sa surface.

Le compound est caractérisé par une fluidité comprise entre 5 et 20g/10min à 190°C et sous 2,16kg, permettant de remplir aisément par injection sous pression les fines lamelles, une densité du matériau comprise entre 0,920 et 0,950 g/cm3, ce qui permet à la pièce de ne pas couler mais de se maintenir entre deux eaux pour disposer d'une efficacité optimale sous l'effet des bulles générées par l'aérateur, et l'ajout d'une charge organique végétale dans la résine plastique et en particulier du bois dans une proportion comprise entre 15 et 30% en masse.

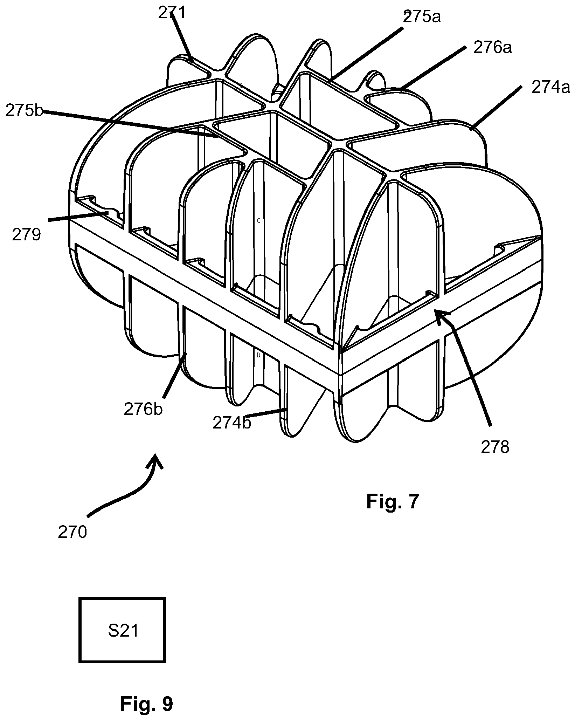

La figure 7 illustre un autre mode de réalisation d'un support de fixation 270. Le support de fixation 270 diffère essentiellement du support de fixation 70 par la présence d'une pluralité d'ergots 279.

Le support de fixation 270 comporte une plaquette centrale 271, à partir de laquelle s'étendent une pluralité de premières lamelles 74a, et au moins une plaquette de raccord 275a de lamelles, reliant entre elles des lamelles de la pluralité de premières lamelles 274a, et des deuxièmes lamelles 276a s'étendant sensiblement depuis la plaquette de raccord 275a.

De manière symétrique de part et d'autre de la plaquette centrale 271, une pluralité de troisièmes lamelles 274b s'étendent de la plaquette centrale, symétriques à la pluralité de premières lamelles 274a, et une deuxième plaquette de raccord 275b relie entre elles des troisièmes lamelles de la pluralité de troisièmes lamelles 274b. Des quatrièmes lamelles 276b s'étendant sensiblement depuis la deuxième plaquette de raccord 275b, symétriques aux deuxièmes lamelles, par rapport à la plaquette centrale 271.

Dans le mode de réalisation représenté, les plaquettes de raccord 275a, 275b sont sensiblement parallèles à la plaquette centrale 271. Ceci n'est qu'un exemple non limitatif.

La présence de plaquettes de raccord permet avantageusement d'augmenter la surface spécifique utile, pour la fixation et la formation de biofilm.

Une ceinture périphérique 278 entoure le corps de support. La ceinture périphérique 278 empêche l'enchevêtrement de lamelles du support avec des lamelles d'un support identique ou semblable, et constitue ainsi un moyen d'anti-enchevêtrement

La ceinture périphérique 278 est munie d'ergots 279, qui sont disposés à intervalle le long de la ceinture périphérique 279. Les ergots 279 sont orientés vers l'intérieur du support de fixation 270, entre la pluralité de lamelles. Avantageusement, les ergots 279 permettent un démoulage facilité du support de fixation 270, lorsque le support de fixation 270 est obtenu par injection.

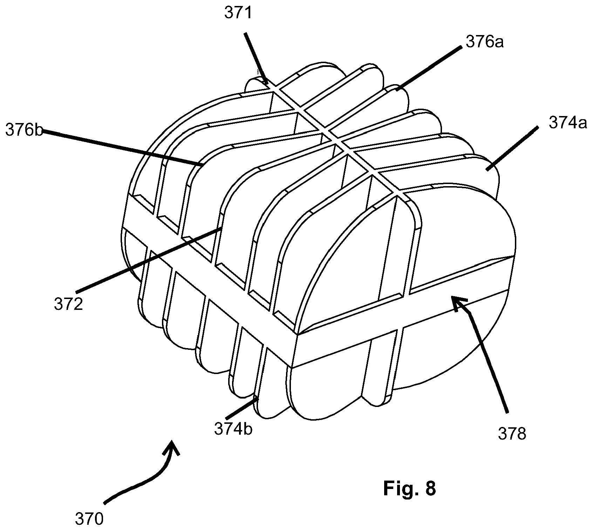

La figure 8 illustre un support de fixation 370 selon encore un mode de réalisation de l'invention. Le support de fixation 370 diffère essentiellement des supports de fixation 70, 270 illustrés sur les figures 6 et 7 en ce qu'il n'a pas de plaquettes de raccord.

Le support de fixation 370 comporte une plaquette centrale 371, à partir de laquelle s'étendent une pluralité de premières lamelles 374a, et une pluralité des deuxièmes lamelles 376a.

De manière symétrique de part et d'autre de la plaquette centrale 271, une pluralité de troisièmes lamelles 374b s'étendent de la plaquette centrale, symétriques à la pluralité de premières lamelles 374a. Des quatrièmes lamelles 376b s'étendent sensiblement de la plaquette centrale 371, symétriques à la pluralité de deuxièmes lamelles 376a.

Dans le mode de réalisation représenté, les premières lamelles 374a sont parallèles entre elles. Les deuxièmes lamelles 376a sont également parallèles entre elles. De même, par symétrie, les troisièmes lamelles 374b sont parallèles entre elles. Les quatrièmes lamelles 376b sont également parallèles entre elles.

Le support de fixation 370 comprend une deuxième plaquette centrale 372, sensiblement perpendiculaire à la plaquette centrale 371.

A la figure 8, les premières lamelles 374a sont sensiblement symétriques des deuxièmes lamelles 376a, par rapport à la deuxième plaquette centrale 372. De même, les troisièmes lamelles 374b sont symétriques des quatrièmes lamelles 376b, par rapport à la deuxième plaquette centrale 372.

Dans le mode de réalisation illustré, les premières lamelles 374a sont sensiblement symétriques des deuxièmes lamelles 376a, de part et d'autre de la deuxième plaquette centrale 372, et les troisièmes lamelles 374b sont symétriques des quatrièmes lamelles 376b, par rapport à la deuxième plaquette centrale 372. Dans une alternative, les premières et deuxièmes lamelles, respectivement les troisièmes et quatrièmes lamelles, peuvent être parallèles entre elles. Dans encore un autre mode de réalisation, les premières et deuxièmes lamelles, respectivement les troisièmes et quatrièmes lamelles, peuvent être non symétriques.

Une ceinture périphérique 378 entoure le corps de support. La ceinture périphérique 378 empêche l'enchevêtrement de lamelles du support avec des lamelles d'un support identique ou semblable, et constitue ainsi un moyen d'anti-enchevêtrement

La ceinture périphérique 378 du support 370 n'a pas d'ergots. Cependant, dans un mode de réalisation alternatif, la ceinture 378 pourrait également avoir des ergots, afin de faciliter le démoulage lors de la fabrication du support.

Un procédé de fabrication d'un support de fixation de bactéries est décrit en référence à la figure 9. Le procédé de fabrication vise à la fabrication d'un support de fixation de flocs bactériens présentant un corps de support et des lamelles espacées, et ayant une résistance contre les chocs et une géométrie complexe, tels que les supports de fixation des figures 6 à 8.

Le procédé comprend l'étape S21 d'injecter sous pression un mélange comportant au moins une résine plastique et une charge organique végétale, dans un moule de forme correspondante à la forme du support à obtenir.

La charge organique végétale est du type cellulosique, en particulier du bois, et la résine plastique est de préférence du type polypropylène. Un bois type dur ayant une dureté sensiblement comprise entre 2,60 à 4,5 à l'essai de dureté Brinell, et une masse volumique est généralement comprise entre 550 et 800 kg/m3 est préféré.

La proportion de charge organique végétale est sensiblement comprise entre 15 et 30% en masse. Cette proportion permet de stabiliser des paramètres d'injections, qui sont difficiles à stabiliser lorsque le pourcentage de charge végétale est élevé.

Le mélange à une fluidité comprise sensiblement entre 5 et 20g/10 minutes à 190°C et sous 2,16kg.

Le mélange a une densité comprise sensiblement entre 0,920 et 0,950 g/cm3. Ceci permet d'obtenir un support de fixation qui pourra être utilisé en immersion libre, c'est-à-dire que le support ainsi obtenu ne flottera pas mais ne coulera pas non plus, En d'autres termes, un support obtenu par injection d'un mélange de densité comprise entre 0,920 et 0,950 g/cm3 pourra se maintenir dans un volume d'eau, sans couler et sans pour autant remonter à la surface. Un tel support peut être utilisé dans le compartiment de réactions de la cuve 2 décrite en référence aux figures 1 et 2.

Les procédés de moulage par injection étant bien connus de l'homme du métier, il est suffisant d'indiquer que la particularité de procédé de fabrication d'un support de culture consiste dans le fait d'utiliser une résine plastique et une charge organique végétale. En effet, dans l'art antérieur, les supports ont été plutôt fabriqués à partir de matériau exclusivement plastiques pour des raisons de non putréfaction ou de non périssabilité. Les quelques tentatives d'obtenir des supports de culture comportant des matériaux de qualité organique végétale se limitent à des pièces de géométrie simple, la plupart du temps obtenues par extrusion.

Cette invention n'est pas limitée à l'exemple de réalisation décrit ci-dessus mais elle en englobe toutes les variantes. En particulier, une caractéristique illustrée et/ou décrite en combinaison avec d'autres caractéristiques peut être prévue indépendamment ou en combinaison avec d'autres caractéristiques illustrés indépendamment ou en combinaison avec d'autres caractéristiques et ce respectivement indépendamment ou en combinaison arbitraire.

## Revendications

1. Support de fixation (70) de bactéries, comportant un corps de support avec une pluralité de lamelles (72) espacées, au moins deux lamelles (74a) de la pluralité de lamelles ayant des extrémités sensiblement parallèles, le corps de support (71) ayant un moyen d'anti-enchevêtrement (78) du support avec un support identique ou similaire, dans lequel le moyen anti-enchevêtrement comprend une ceinture périphérique (78) adaptée pour empêcher l'enchevêtrement de lamelles du support avec des lamelles d'un support identique ou semblable,
dans lequel le support comprend une plaquette centrale (71), à partir de laquelle s'étendent une pluralité de premières lamelles (74a), et au moins une plaquette de raccord (75a) de lamelles, reliant entre elles des lamelles de la pluralité de premières lamelles (74a), et des deuxièmes lamelles (76a) s'étendant sensiblement depuis la plaquette de raccord (75a),
**caractérisé en ce que** la plaquette de raccord (75a) est parallèle à la plaquette centrale (71),
dans lequel un espace inter-lamellaire est au moins égal ou supérieur à 10 mm, le support comprenant une pluralité de troisièmes lamelles (74b), s'étendant de la plaquette centrale (71) et symétriques de part et d'autre de la plaquette centrale (71) par rapport à la pluralité de premières lamelles (74a), une deuxième plaquette de raccord (75b), reliant entre elles des lamelles de la pluralité de troisièmes lamelles (74b), et des quatrièmes lamelles (76b) s'étendant sensiblement depuis la deuxième plaquette de raccord (75b), la deuxième plaquette de raccord (75b) étant parallèle à la plaquette centrale (71).

2. Support selon la revendication 1, comprenant un ou plusieurs parmi :
- une structure squelette en forme d'un ou plusieurs anneaux ;
- une structure squelette comportant au moins une plaquette centrale à partir de laquelle s'étendent les lamelles, symétriquement de part et d'autre de la plaquette ;
- au moins un élément raccordant des extrémités libres des lamelles.

3. Support selon l'une quelconque des revendications 1 à 2, comprenant :
- une taille comprise entre 5 et 7 cm ;
- une surface spécifique comprise entre 800 et 1500m²/m³ ; et/ou
- un ratio masse/surface inférieur ou égale à 1200 g/m².

4. Support selon l'une quelconque des revendications 1 à 3, configuré pour la ceinture périphérique soit en position horizontale lorsque le support est en immersion libre.

5. Support selon l'une quelconque des revendications 1 à 4, fabriqué par moulage par injection et/ou constitué par un mélange comportant au moins une résine plastique et une charge organique végétale, la charge organique végétale étant du bois, et la proportion de charge organique végétale étant sensiblement comprise entre 15 et 30% en masse.

## Patentansprüche

1. Träger (70) zum Anhaften von Bakterien, umfassend einen Trägerkörper mit einer Mehrzahl von beabstandeten Lamellen (72), wobei mindestens zwei Lamellen (74a) der Mehrzahl von Lamellen im Wesentlichen parallele Enden aufweisen, wobei der Trägerkörper (71) eine Anti-Verklemm-Einrichtung bzw. Anti-Verkeil-Einrichtung (78) des Trägers mit einem gleichen oder ähnlichen Träger aufweist, wobei die Anti-Verklemm- bzw. Anti-Verkeil-Einrichtung einen Umfangsgürtel (78) umfasst, der eingerichtet ist, um ein Verklemmen/Verkeilen/Nerheddern von Lamellen des Trägers mit Lamellen eines identische oder ähnliche Trägers zu verhindern oder zu hemmen,
wobei der Träger eine zentrale Platte (71) umfasst, von der sich eine Mehrzahl von ersten Lamellen (74a) erstrecken, sowie mindestens eine Lamellenverbindplatte (75a), die die Lamellen der Mehrzahl von ersten Lamellen (74a) miteinander verbindet, wie auch zweite Lamellen (76a), die sich im Wesentlichen von der Verbindplatte (75a) erstrecken,
**dadurch gekennzeichnet, dass** die Verbindplatte (75a) parallel zu der zentrale Platte (71) ist,
wobei ein interlamellarer Raum mindestens 10 mm oder mehr beträgt, der Träger eine Mehrzahl von dritten Lamellen (74b) umfasst, die sich von der zentrale Platte 71) erstrecken und symmetrisch sind beiderseits der zentralen Platte (71) bezüglich der Mehrzahl von ersten Lamellen (74a), ein zweite Verbindplatte (75b), die die Lamellen aus der Mehrzahl von dritten Lamellen (74b) miteinander verbindet, und vierte Lamellen (76b), sich im Wesentlichen von der zweiten Verbindplatte (75b) erstreckend, wobei die zweite Verbindplatte (75b) parallel zu der zentralen Platte (71) ist.

2. Träger nach Anspruch 1, umfassend eines oder mehrere der folgenden Elemente: eine Skelettstruktur in Form eines oder mehrerer Ringe; eine Skelettstruktur mit mindestens einer zentralen Platte, von der sich die Lamellen symmetrisch zu beiden Seiten der Platte erstrecken, mindestens ein Verbindelement, welches freien Enden der Lamellen verbindet.

3. Träger nach einem der Ansprüche 1 bis 2, umfassend:
- eine Größe zwischen 5 und 7 cm;
- eine spezifische Oberfläche zwischen 800 und 1500m² / m³; und / oder
- ein Masse / Oberfläche-Verhältnis von weniger als oder gleich 1200 g / m².

4. Träger nach einem der Ansprüche 1 bis 3, eingerichtet, damit der Umfangsgürtel in einer horizontalen Position ist, wenn sich der Träger frei schwimmend ist.

5. Träger nach einem der Ansprüche 1 bis 4, hergestellt durch Spritzgießen und / oder bestehend aus einer Mischung, umfassend mindestens ein Kunstharz und einen pflanzlichen organischen Füllstoff, wobei der organische pflanzliche Füllstoff Holz ist und der Anteil von pflanzlichem organischen Füllstoff im Wesentlichen zwischen 15 und 30 Gew .-% ausmacht.

## Claims

1. A fixing support (70) for bacteria, comprising a support body with a plurality of lamellae (72) spaced apart from each other, at least two lamellae (74a) of the plurality of lamellae having substantially parallel ends, the support body (71) having an anti-entanglement means (78) of the support with an identical or similar support, in which the anti-entanglement means comprises a peripheral belt (78) adapted to prevent the entanglement of lamellae of the support with lamellae of an identical or similar support,
in which the support comprises a central plate (71) from which a plurality of first lamellae (74a) extends and at least one connecting plate (75a) of lamellae, connecting lamellae of the plurality of first lamellae (74a) to each other, and second lamellae (76a) extending substantially from the connecting plate (75a),
**characterized in that**
the connecting plate (75a) is parallel to the central plate (71).
in which an inter-lamellar gap is at least 10 mm or greater
the support comprising a plurality of third lamellae (74b), extending from the central plate (71) and symmetrical on either side of the central plate (71) with respect to the plurality of first lamellae (74a), a second connecting plate (75b), connecting lamellae of the plurality of third lamellae (74b), and fourth lamellae (76b) extending substantially from the second connecting plate (75b), the second connecting plate (75b) being parallel to the central plate (71).

2. The support according to claim 1, comprising one or more of:
- a skeleton structure in the form of one or more rings;
- a skeleton structure comprising at least one central plate from which the lamellae extend, symmetrically on either side of the plate,
- at least one element connecting free ends of the lamellae

3. The support according to claim 1, comprising:
- a size of between 5 and 7 cm;
- a specific surface area of between 800 and 1500 m²/m³; and/or
- a mass to surface ratio of 1200 g/m² or less.

4. The support according to claim 1, configured such that the peripheral belt is in a horizontal position when the support is in free immersion.

5. The support according to claim 1, manufactured by injection molding and/or consisting of a mixture comprising at least one plastic resin and a plant organic filler, the plant organic filler being wood, and the proportion of plant organic filler being substantially between 15 and 30% by mass.
